# EUROPÄISCHE PATENTSCHRIFT

(11) **EP 2 822 227 B1**
(45) Veröffentlichungstag und Bekanntmachung des Hinweises auf die Patenterteilung: **22.02.2017**
(21) Anmeldenummer: 13182370.0
(22) Anmeldetag: 30.08.2013
(51) Int. Cl.: H04L 12/40

(54) **CAN-FD-Kommunikationsnetzwerk**
CAN-FD communication network
Réseau de communications CAN-FD

(30) Priorität: 04.07.2013 DE 102013213082
(43) Veröffentlichungstag der Anmeldung: 07.01.2015
(73) Patentinhaber: Elmos Semiconductor Aktiengesellschaft, 44227 Dortmund (DE)
(72) Erfinder: Kraly, Rainer, 44227 Dortmund (DE)
(74) Vertreter: dompatent von Kreisler Selting Werner - Partnerschaft von Patent- und Rechtsanwälten mbB

(56) Entgegenhaltungen:
- EP-A1- 1 551 132
- EP-A1- 2 800 316
- US-A1- 2010 103 859
- Robert Bosch Gmbh: "CAN with Flexible Data-Rate Specification Version 1.0", , 17. April 2012 (2012-04-17), XP055047460, Gerlingen, Germany Gefunden im Internet: URL:http://can-newsletter.org/assets/files /ttmedia/raw/e5740b7b5781b8960f55efcc2b93e df8.pdf [gefunden am 2012-12-11]

## Beschreibung

Die Erfindung betrifft ein CAN-FD-Kommunikationsnetzwerk zur Übertragung von Nachrichten mit unterschiedlichen Übertragungsgeschwindigkeiten.

Der CAN (Controller Area Network)-Standard wurde Anfang der 1980er Jahre entwickelt, und zwar speziell für den seriellen Datenaustausch zwischen elektronischen Steuergeräten (Busteilnehmern) in Kraftfahrzeugen. Später wurde dann der CAN-Standard für industrielle Mikrocontroller-Netzwerke eingesetzt (wie bspw. in internen Bus-Systemen von Werkzeugmaschinen, für die Einbindung verteilter Mess-, Steuer- und Anzeigefunktionen einer unteren Automatisierungsebene in ein übergeordnetes Rechnersystem oder als Anschlussbus für Sensoren, Aktuatoren oder Bedienungsschnittstellen).

Zur weiteren Verbesserung und insbesondere Steigerung der Übertragungsraten in CAN-Systemen wurde mit der Entwicklung eines sogenannten CAN-FD-Standards begonnen, wobei diese Bezeichnung für "CAN mit flexibler Datenrate" steht. Neben der Möglichkeit, die Nutzdaten mit einer erhöhten Geschwindigkeit (Datenrate) zu versenden, besteht ein weiterer Unterschied des CAN-FD-Standards zum CAN-Standard in der Erweiterung der Nutzdaten von 8 auf 64 Bytes.

Der CAN-FD-Standard ist z. B. beschrieben in Robert Bosch GmbH: "CAN with Flexible Data-Rate Specification Version 1.0", Gerlingen, Germany, URL:http://can-newsletter.org/assets/files/ttmedia/raw/ e5740b7b5781b8960f55efcc2b93edf8.pdf CAN-FD-fähige Busteilnehmer und insbesondere ihre Bustransceiver werden in der Lage sein, neben CAN-FD-Nachrichten auch CAN-Nachrichten zu verarbeiten. Dies gilt aber leider nicht umgekehrt, was bedeutet, dass die bisherigen CAN-Busteilnehmer und insbesondere deren Bustransceiver zukünftige CAN-FD-Nachrichten verstehen können.

Die Adaption von für den CAN-Standard ausgelegten elektronischen Komponenten der Busteilnehmer an den CAN-FD-Standard erfordert aber neben einer Hardware-Veränderung auch neue Software. Dies ist aufwendig, was insbesondere für Busteilnehmer gilt, die nicht notwendigerweise für eine erhöhte Datenübertragung und erweiterte Nutzdatenfelder ausgelegt werden müssen.

In EP-A-2 800 316 ist ein Kommunikationsnetzwerk zur Übertragung von CAN- und CAN-FD-Nachrichten, also von Nachrichten mit unterschiedlicher Übertragungsgeschwindigkeit beschrieben. Das Kommunikationsnetzwerk weist eine Busleitung mit mehreren Busteilnehmern auf, von denen jeder einen an die Busleitung angeschlossenen Bustransceiver und eine mit diesem gekoppelte Steuereinheit unter anderem zur Umsetzung von über die Busleitung empfangenen Nachrichten und zur Erzeugung von über die Busleitung zu versendenden Nachrichten aufweist. Jede Nachricht umfasst dabei Steuerdaten und Nutzdaten. Die Nachrichten sind unterteilt in erste bzw. CAN-Nachrichten, deren Nutzdaten über die Busleitung mit einer ersten Geschwindigkeit übertragen werden und in zweite bzw. CAN-FD-Nachrichten, deren Nutzdaten über die Busleitung mit eine gegenüber der ersten Geschwindigkeit größeren zweiten Geschwindigkeit übertragen werden. In den Steuerdaten jeder Nachricht befindet sich eine die Übertragungsgeschwindigkeit der Nutzdaten der betreffenden Nachricht repräsentierende Kodierung. Die Busteilnehmer umfassen erste bzw. CAN-Busteilnehmer, die ausschließlich erste bzw. CAN-Nutzdaten empfangen und verarbeiten können, und zweite bzw. CAN-FD-Busteilnehmer, die sowohl erste, also CAN- als auch zweite, d.h. CAN-FD-Nachrichten empfangen und verarbeiten können. Die Bustransceiver der ersten bzw. CAN-Busteilnehmer ersetzen bei während des Empfangs einer zweiten bzw. CAN-FD-Nachricht erfolgenden Erkennung der die zweite Übertragungsgeschwindigkeit anzeigenden Kodierung die Nutzdaten dieser zweiten, d.h. CAN-FD-Nachricht durch Ersatz-Nutzdaten, um diese Ersatz-Nutzdaten mit der ersten Geschwindigkeit an die Steuereinheit zu übertragen.

Es besteht ein Bedarf an Bustransceivern oder Umsetzern, mit denen es möglich ist, die bisherige Architektur der CAN-Busteilnehmer weiter zu verwenden, und zwar insbesondere in "gemischten Kommunikationsnetzwerken", die CAN-Busteilnehmer und CAN-FD-Busteilnehmer aufweisen.

Mit der Erfindung wird daher ein CAN-FD-Kommunikationsnetzwerk zur Übertragung von Nachrichten vorgeschlagen, das versehen ist mit den Merkmalen des Anspruchs 1. Einzelne Ausgestaltungen der Erfindung sind Gegenstand der jeweiligen Unteransprüche.

Sowohl CAN-Nachrichten als auch die CAN-FD-Nachrichten setzen sich zusammen aus Steuerdaten und Nutzdaten. In den Steuerdaten befindet sich eine Information (bspw. ein Bit), die besagt, ob eine Nachricht eine CAN-Nachricht oder eine Nachricht vom CAN-FD-TYP ist. Bei einer CAN-Nachricht werden die Nutzdaten (und die Steuerdaten) mit einer ersten, niedrigeren Geschwindigkeit übertragen, während zumindest die Nutzdaten (und ggf. auch zumindest Teile der Steuerdaten) bei einer zweiten bzw. CAN-FD-Nachricht mit einer höheren zweiten Geschwindigkeit übertragen werden. Beim CAN- bzw. CAN-FD-Standard ist es so, dass sämtliche Steuergeräte bzw. Busteilnehmer fortwährend "zuhören" und auf dem Bus liegende Nachrichten lesen. Parallel dazu entscheidet ein Busteilnehmer, ob die gerade versendete Nachricht für ihn bestimmt ist oder nicht. Während des Empfangs einer zweiten Nachricht untersucht der Bustransceiver eines CAN-Busteilnehmers nun die Nachricht hinsichtlich der Kodierung als CAN oder als CAN-FD-Nachricht. Wird eine CAN-FD-Nachricht erkannt, so beginnt der erfindungsgemäße Bustransceiver bereits während des Empfangs der zweiten Nachricht, also der CAN-FD-Nachricht, damit, die Nutzdaten dieser zweiten Nachricht zu ersetzten durch solche Nutzdaten, die hinsichtlich der Datenrate gleich den Nutzdaten einer ersten Nachricht bzw. einer CAN-Nachricht sind. Dies kann auch zusätzlich noch für das Datenformat gelten. Ein Bustransceiver kann nämlich nicht die Durch- bzw. Weiterleitung eine CAN-FD-Nachricht in dem Augenblick beenden, indem er die Dekodierung für eine CAN-FD-Nachricht detektiert hat. In diesem Fall würde nämlich die Steuereinheit bzw. der Mikrocontroller des CAN-Busteilnehmers lediglich eine unvollständige Nachricht empfangen und allein deshalb eine Fehlermeldung erzeugen. Dies gilt es zu verhindern, weshalb erfindungsgemäß die CAN-FD-Nachricht umgesetzt und als mit Ersatz-Nutzdaten komplettierte Nachricht vom CAN-Typ an den Mikrocontroller des CAN-Bus-Teilnehmers übertragen wird. Auf diese Weise besteht für den CAN-Busteilnehmer bzw. für dessen Mikrocontroller (Steuereinheit) keine Veranlassung (mehr), die empfangene Nachricht als nicht erkannte CAN-Nachricht zurückzuweisen oder eine entsprechende Fehlermeldung zu erzeugen.

Wesensmerkmal der Erfindung ist aber die Adaption einer CAN-FD-Nachricht in eine CAN-Nachricht, die Erkennung einer CAN-FD-Nachricht (vorstehend als zweite Nachricht bezeichnet) in einem Bustransceiver und das Ersetzen der mit hoher Datenrate übermittelten Nutzdaten der CAN-FD-Nachricht durch Ersatz-Nutzdaten mit einer Übertragungsrate, die gleich der Geschwindigkeit einer CAN-Nachricht (vorstehend mit erste Nachricht bezeichnet) ist. Dadurch wird erreicht, dass ein CAN-Busteilnehmer (vorstehend mit erster Teilnehmer bezeichnet) CAN-FD-Nachrichten empfängt, ohne diese als fehlerhaft zurückzuweisen. Denn ohne eine spezielle Maßnahme im Vorfeld der Nachrichtenuntersuchung innerhalb eines CAN-Busteilnehmers würde dieser bei Empfang einer CAN-FD-Nachricht eine Fehlermeldung erzeugen. Dies kann erfindungsgemäß durch den Austausch zumindest der Nutzdaten einer CAN-FD-Nachricht (ggf. auch einiger Steuerdaten dieser Nachricht) durch Daten erfolgen, deren Format und/oder Datenrate gleich sind wie bei einer CAN-Nachricht. Die ursprünglich in der CAN-FD-Nachricht enthaltene Information wird durch die Ersatz-Nutzdaten überschrieben und steht damit nicht mehr zur Verfügung. Dies ist aber in der Regel auch nicht notwendig.

Gemäß der Erfindung ist es also lediglich erforderlich, die Architektur eines Steuergeräts für einen CAN-Bus hinsichtlich des Bustransceivers dieses Steuergeräts zu ändern; die gesamte übrige Hardware und insbesondere die Software für das Steuergerät können unverändert bleiben.

Es ist erfindungsgemäß sinnvoll, dass der Inhalt der Ersatz-Nutzdaten durch einen programmierenden Zugriff über den CAN-Bus oder CAN-FD-Bus geändert werden kann. Eine solche Änderung kann ggf. auch durch das Steuergerät (d.h. den Teilnehmer) selbst erfolgen.

Zweckmäßig ist es, wenn sich der entsprechende CAN-Busteilnehmer auf den Empfang der erfindungsgemäß in eine CAN-Nachricht umgesetzten CAN-FD-Nachricht im Wesentlichen neutral verhält, bspw. so verhält, wie sich ein CAN-Teilnehmer bei Empfang einer ihn nicht betreffenden CAN-Nachricht verhält. Aber auch andere Verhaltensszenarien sind denkbar, wobei in sämtlichen Fällen sichergestellt sein sollte, dass die Erzeugung einer Fehlermeldung allein aufgrund der Umsetzung der Daten unterbleiben sollte.

Insbesondere kann es zweckmäßig sein, wenn der Bustransceiver jedes ersten Busteilnehmers in Reaktion auf die Erkennung der die zweite Nutzdaten-Übertragungsgeschwindigkeit anzeigenden Kodierung während des weiteren Empfangs einer zweiten Nachricht die Übertragung der Nutzdaten dieser zweiten Nachricht an die Steuereinheit des betreffenden ersten Busteilnehmers unterbindet und zur Komplettierung der an diese Steuereinheit zu sendenden Nachricht als eine erste Nachricht Ersatz-Nutzdaten mit der ersten Geschwindigkeit an die Steuereinheit sendet. Das Verhalten der Steuereinheit kann dabei vom Inhalt der Ersatz-Nutzdaten abhängen. Zum Beispiel kann sich der Busteilnehmer passiv verhalten oder aber eine Aktion initiieren.

Die Erfindung wird nachfolgend anhand dreier verschiedener Kommunikationsnetzwerk-Konfigurationen sowie unter Bezugnahme auf die Zeichnung nähere erläutert. Im Einzelnen zeigen dabei:
- Fign. 1 bis 3: drei verschiedene Beispiele für mögliche Anwendungen von CAN-Busteilnehmern und CAN-FD-Busteilnehmern in einem "gemischten" Kommunikationsnetzwerk und
- Fig. 4: eine Darstellung des Aufbaus und der Verschaltung von Funktionseinheiten eines erfindungsgemäßen Bustransceivers zur Realisierung einer Aufwärts-Kompatibilität bisheriger CAN-Steuergeräte, um diese insoweit CAN-FD-fähig zu gestalten, als die CAN-Steuergeräte auf den Empfang von CAN-FD-Nachrichten keine Fehlermeldungen erzeugen.

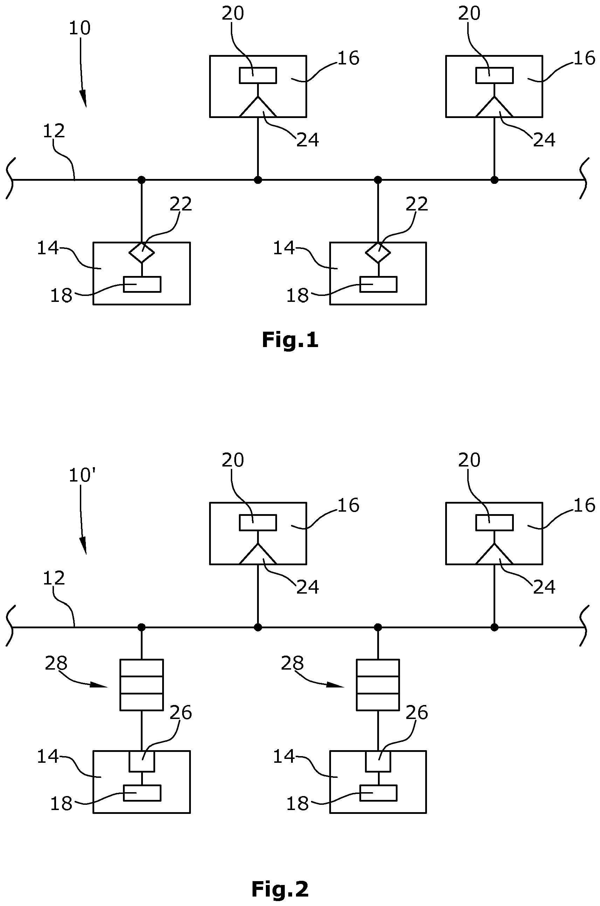

In Fig. 1 ist ein erfindungsgemäßes Ausführungsbeispiel eines gemischten Kommunikationsnetzwerks 10 gezeigt, an dessen Busleitung 12 erste oder CAN-Steuergeräte (Busteilnehmer) 14 und zweite oder CAN-FD-Steuergeräte (oder Busteilnehmer) 16 angeschlossen sind. Als Haupt-Steuerkomponenten und Datenverarbeitungseinheiten der Busteilnehmer sind in Fig. 1 mit 18 und 20 die Mikrocontroller der ersten bzw. zweiten Steuergeräte 14, 16 dargestellt, die die an den entsprechenden Busteilnehmer angeschlossenen Einheiten wie bspw. Stellglieder, Sensoren odgl. steuern bzw. von diesen Daten empfangen. Die CAN-Busteilnehmer 14 weisen dabei Bustransceiver 22 auf, die erfindungsgemäß für eine Nachrichtenumsetzung sorgen, und zwar dergestalt, dass eine CAN-FD-Nachricht während des Empfangs in einen CAN-Nachrichtentyp umgesetzt wird, so dass der jeweils nachgeschaltete Mikrocontroller 18, der lediglich CAN-Nachrichten verarbeiten kann, nicht "bemerkt", dass eine CAN-FD-Nachricht empfangen bzw. gelesen wurde. Mit 24 sind solche Bustransceiver bezeichnet, die CAN-FD-fähig sind und damit sowohl CAN-FD-Nachrichten als auch CAN-Nachrichten verarbeiten können.

Fig. 2 zeigt schematisch ein Kommunikationsnetzwerk 10', in dem CAN-Steuergeräte (Busteilnehmer) 14 mit ausschließlich CAN-fähigen Bustransceivern 26 neben CAN-FD-Busteilnehmern 16 eingesetzt werden. In Fig. 2 sind diejenigen Komponenten, die identisch bzw. funktionsgleich zu Komponenten des Kommunikationsnetzwerks 10 der Fig. 1 sind, mit den gleichen Bezugszeichen versehen. Die CAN-Busteilnehmer 14 sind dabei unter Zwischenschaltung von Umsetzern 28 an die Busleitung 12 angerschlossen, während die CAN-FD-Busteilnehmer 16 direkt an die Busleitung 12 angeschlossen sind. Die Umsetzer 18 arbeiten nun so, wie es oben anhand der Bustransceiver 22 beschrieben ist. In den Umsetzern erfolgt also eine Umsetzung einer CAN-FD-Nachricht in eine Nachricht vom CAN-Nachrichtentyp, die dann von dem ausschließlich CAN-fähigen Bustransceiver 26 "verstanden" und weitergeleitet wird.

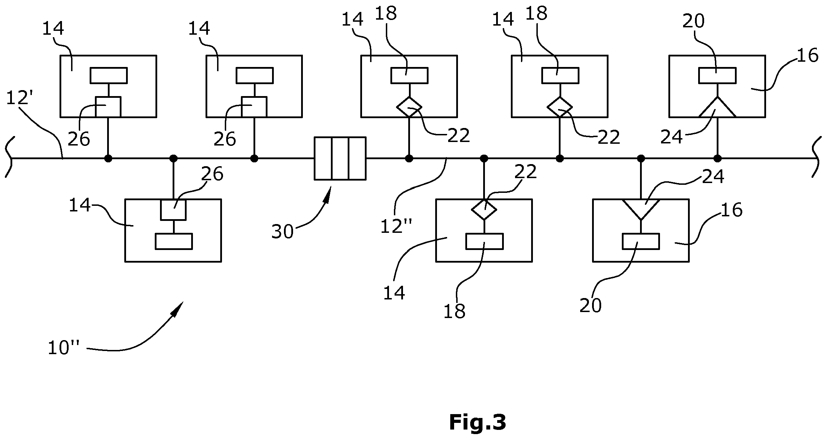

Schließlich zeigt Fig. 3 ein Kommunikationsnetzwerk 10" dessen Busleitung in zwei Busleitungsabschnitte und damit das Kommunikationsnetzwerk 10' in zwei Teile unterteilt ist. Der erste Busleitungsabschnitt 12' soll dabei ausschließlich CAN-fähig konfiguriert sein, weshalb an diesem Busleitungsabschnitt 12' ausschließlich CAN-fähige (erste) Busteilnehmer 14 angeschlossen sind. Diese Busteilnehmer 14 weisen ausschließlich CAN-fähige Bustransceiver 26 auf. Über ein in gewisser Weise unidirektionales Übertragungsfilter 30 ist der erste Busleitungsabschnitt 12' mit einem zweiten Busleitungsabschnitt 12" verbunden, an dem ausschließlich Busteilnehmer angeschlossen sind, die CAN-FD-Nachrichten verarbeiten können. Dabei brauchen diese Busteilnehmer nicht ausschließlich für die Verarbeitung von CAN-FD-Nachrichten ausgelegt sein; wie im oben beschriebenen Beispiel der Fig. 1 können die Busteilnehmer, die an dem Busleitungsabschnitt 12" angeschlossen sind, einerseits als CAN-FDfähige Busteilnehmer 16 und andererseits ausschließlich als CAN-fähige Busteilnehmer 14 ausgebildet sein. Insoweit weisen also die CAN-FD-Busteilnehmer 16 Bustransceiver 24 auf, die sowohl CAN-Nachrichten als auch CAN-FD-Nachrichten verarbeiten können, womit also dann auch die zugehörigen Mikrocontroller 20 beide Nachrichtentypen verarbeiten können (und zwar ohne Nachrichtenumsetzung).
Demgegenüber sind die CAN-Busteilnehmer 14 in der Lage, ausschließlich CAN-Nachrichten zu verarbeiten, was ihre Mikrocontroller 18 betrifft. Insoweit sind also diese CAN-Busteilnehmer 14 mit erfindungsgemäß ausgestalteten Bustransceivern 22, wie sie oben beschrieben sind, ausgestattet.

Das Übertragungsfilter 30 arbeite insoweit unidirektional, als es CAN-Nachrichten aus dem ersten Busleitungsabschnitt 12' zum zweiten Busleitungsabschnitt 12" durchleitet, und zwar im Wesentlichen unverändert. Demgegenüber werden aber CAN-FD-Nachrichten aus dem zweiten Busleitungsabschnitt 12" an einer unveränderten Übertragung zum ersten Busleitungsabschnitt 12' gehindert (Unidirektionalität). Das Übertragungsfilter 30 kann bspw. derart ausgestaltet sein, dass es CAN-FD-Nachrichten aus dem zweiten Busleitungsabschnitt 12' in der oben beschriebenen Art und Weise in Nachrichten vom CAN-Typ umsetzt, die dann von den CAN-Teilnehmern 14 insoweit verarbeitet werden können, als diese CAN-Teilnehmer 14 keine Fehlermeldungen aufgrund eines nicht erkannten Nachrichtentyps erzeugen.

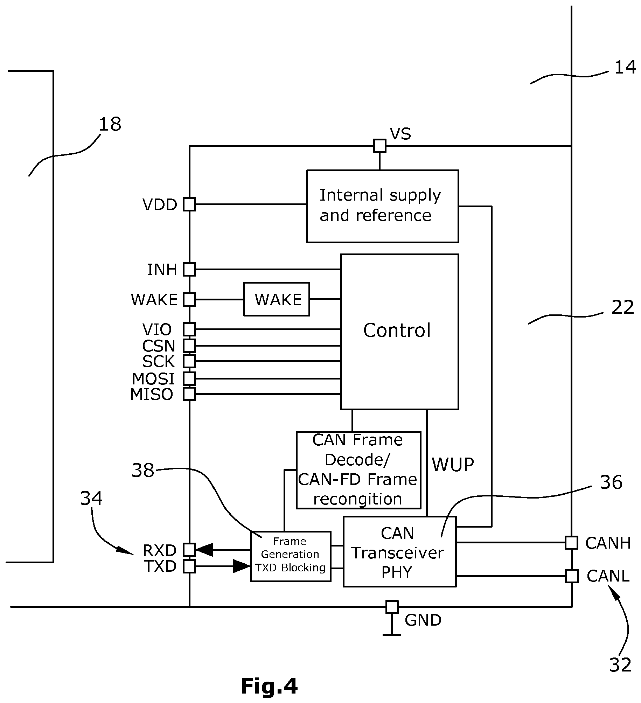

In Fig. 4 sind die Hauptkomponenten (Funktionsgruppen) eines Erfindungsgemäßen Bustransceiver 22 gezeigt, der den ausschließlich CAN-fähigen Bustransceiver eines CAN-Steuergeräts (CAN-Busteilnehmer) 14 ersetzen kann, so dass dieser ansonsten unveränderte Busteilnehmer bzw. dieses Steuergerät dann beim Empfang von CAN-FD-Nachrichten wegen dieses anderen Nachrichtentyps keine Fehlermeldungen erzeugt. Der Bustransceiver 22 ist an seinem Eingang 32 an den (in Fig. nicht gezeigten) Bus angeschlossen und sorgt, wie für einen Bustransceiver üblich, zunächst für eine Buspegelumsetzung um die umgesetzten Buspegel dann über seinen Ausgang 34 an den Mikrocontroller 18 weiter zu geben. Zwischen den "physikalischen" CAN-Transceiver-Bausteinen 36, der mit dem Eingang 32 des Bustransceiver 22 verbunden ist und den Ausgang des Bustransceiver 22 ist erfindungsgemäß eine Umsetzereinheit 38 geschaltet, die bei Erkennung der in den Steuerdaten einer CAN-FD-Nachricht enthaltenen Kodierung, welche anzeigt, dass die anschließend versendeten Daten mit einer erhöhten Datenrate übertragen werden, diese mit erhöhten Datenrate eingehenden Daten durch Ersatz- bzw. Dummy-Daten mit einer Datenrate ersetzt, so dass die über den Ausgang 34 ausgegebene Nachricht vom CAN-Nachrichtentyp und z. B. typischerweise bedeutungs- bzw. inhaltsleer ist. Die Umsetzereinheit 38 blockiert ferner eine ggf. vom Mikrocontroller 18 des Busteilnehmers 14 über TXD gesendete Acknowledge-Nachricht, so dass diese nicht auf die Busleitung 12 gelangt, wo sie, weil zu einem falschen Zeitpunkt gesendet, zu Kommunikationsstörungen führen könnte. Die Umsetzereinheit 38 arbeitet in der zuvor beschriebenen Weise nur dann, wenn CAN-FD-Nachrichten empfangen werden. Beim Empfangen von CAN-Nachrichten leitet die Umsetzereinheit 38 die Nachricht lediglich zum Ausgang 34 unverändert weiter. Die Umsetzung der Nachrichten sollte während des Empfangs erfolgen, da andernfalls eine möglicherweise nicht zu tolerierende Verzögerung in der Datenübertragung eintreten könnte.

## Patentansprüche

1. CAN-FD-Kommunikationsnetzwerk zur Übertragung von Nachrichten mit unterschiedlichen Übertragungsgeschwindigkeiten mit
- einer Busleitung (10) und
- mehreren Busteilnehmern (14, 16), von denen jeder einen an die Busleitung (10) angeschlossenen Bustransceiver (22) und eine mit diesem gekoppelte Steuereinheit (18) unter anderem zur Umsetzung von über die Busleitung (10) empfangenen Nachrichten und zur Erzeugung von über die Busleitung (10) zu versendenden Nachrichten aufweist,
- wobei jede Nachricht Steuerdaten und Nutzdaten aufweist,
- wobei die Nachrichten erste Nachrichten, deren Nutzdaten über die Busleitung (10) mit einer ersten Geschwindigkeit übertragen werden, und zweite Nachrichten umfassen, deren Nutzdaten über die Busleitung (10) mit einer gegenüber der ersten Geschwindigkeit größeren zweiten Geschwindigkeit übertragen werden,
- **dadurch gekennzeichnet, dass** die Steuerdaten jeder Nachricht eine die Übertragungsgeschwindigkeit der Nutzdaten der betreffenden Nachricht repräsentierende Kodierung enthalten,
- wobei die Busteilnehmer (14, 16) erste Busteilnehmer (14), die ausschließlich erste Nutzdaten empfangen und verarbeiten können, und zweite Busteilnehmer (16) umfassen, die sowohl erste als auch zweite Nachrichten empfangen und verarbeiten können,
- wobei der Bustransceiver (22) jedes ersten Busteilnehmers bei während des Empfangs einer zweiten Nachricht erfolgender Erkennung der die zweite Nutzdaten-Übertragungsgeschwindigkeit anzeigenden Kodierung die Nutzdaten dieser zweiten Nachricht durch Ersatz-Nutzdaten ersetzt und diese Ersatz-Nutzdaten mit der ersten Geschwindigkeit an die Steuereinheit (18) überträgt und
- wobei die von dem Bustransceiver (22) eines ersten Busteilnehmers (14) verwendeten Ersatz-Nutzdaten durch einen schreibenden Datenzugriff änderbar sind.

2. CAN-FD-Kommunikationsnetzwerk nach Anspruch 1, **dadurch gekennzeichnet, dass** die von dem Bustransceiver (22) eines ersten Busteilnehmers (14) verwendeten Ersatz-Nutzdaten durch einen schreibenden Datenzugriff über die Busleitung (12) oder durch den ersten Busteilnehmer (14) selbst änderbar sind.

3. CAN-FD-Kommunikationsnetzwerk nach Anspruch 1 oder 2, **dadurch gekennzeichnet, dass** der Bustransceiver (22) jedes ersten Busteilnehmers in Reaktion auf die Erkennung der die zweite Nutzdaten-Übertragungsgeschwindigkeit repräsentierenden Kodierung während des weiteren Empfangs einer zweiten Nachricht die Übertragung der Nutzdaten dieser zweiten Nachricht an die Steuereinheit (18) des betreffenden ersten Busteilnehmers unterbindet und zur Komplettierung der an diese Steuereinheit (18) zu sendenden Nachricht als eine erste Nachricht Ersatz-Nutzdaten mit der ersten Geschwindigkeit an die Steuereinheit (18) sendet.

4. CAN-FD-Kommunikationsnetzwerk nach Anspruch 1 oder 2, **dadurch gekennzeichnet, dass** sich ein erster Busteilnehmer (14) in Reaktion auf die von seiner Steuereinheit (18) empfangenen Ersatz-Nutzdaten so verhält, wie bei Empfang einer nicht an diesen ersten Busteilnehmer (14) adressierten ersten Nachricht.

5. CAN-FD-Kommunikationsnetzwerk nach einem oder mehreren der Ansprüche 1 bis 4, **dadurch gekennzeichnet, dass** sich ein erster Busteilnehmer (14) in Reaktion auf die von seiner Steuereinheit (18) empfangenen Ersatz-Nutzdaten in Abhängigkeit vom Inhalt der Ersatz-Nutzdaten unterschiedlich verhält.

## Claims

1. A CAN-FD communication network for transmission of messages at different transmission rates, comprising
- a bus line (10), and
- a plurality of bus participants (14, 16) each of which includes a bus transceiver (22) connected to the bus line (10) and a control unit (18) coupled with said bus transceiver, *inter alia* for converting messages received via the bus line (10) and for generating messages to be sent via the bus line (10),
- wherein each message includes control data and payload,
- wherein the messages include first messages whose payload is transmitted via the bus line (10) at a first rate, and second messages whose payload is transmitted via the bus line (10) at a second rate which is higher than the first rate,
**characterized in that**
- the control data of each message contain a coding representing the transmission rate of the payload of the respective message,
- wherein the bus participants (14, 16) include first bus participants (14) which can exclusively receive and process a first payload, and second bus participants (16) which can receive and process both first and second messages,
- wherein the bus transceiver (22) of each first bus participant, upon detection of the coding indicating the second payload transmission rate when receiving a second message, substitutes the payload of this second message by a substitute payload and transmits this substitute payload at the first rate to the control unit (18), and
- wherein the substitute payload used by the bus transceiver (22) of a first bus participant (14) is adapted to be changed by a write data access.

2. The CAN-FD communication network according to claim 1, **characterized in that** the substitute payload used by the bus transceiver (22) of a first bus participant (14) is adapted to be changed by a write data access via the bus line (12) or by the first bus participant (14) itself.

3. The CAN-FD communication network according to claim 1 or 2, **characterized in that** the bus transceiver (22) of each first bus participant, in response to the detection of the coding indicating the second payload transmission rate when further receiving a second message, suppresses the transmission of the payload of said second message to the control unit (18) of the respective first bus participant and sends, as a first message, a substitute payload at the first rate to the control unit (18) for completing the message to be sent to said control unit (18).

4. The CAN-FD communication network according to claim 1 or 2, **characterized in that** a first bus participant (14), in response to the substitute payload received by its control unit (18), reacts in the same way as in the case of receiving a first message not addressed to this first bus participant (14).

5. The CAN-FD communication network according to any one or a plurality of claims 1 to 4, **characterized in that** a first bus participant (14), in response to the substitute payload received by its control unit (18), reacts in different ways depending on the contents of the substitute payload.

## Revendications

1. Réseau de communication CAN-FD pour la transmission d'informations à des vitesses de transmission différentes, avec
- une ligne de bus (10) et
- plusieurs participants au bus (14, 16) dont chacun comprend un émetteur/récepteur de bus (22) relié à la ligne de bus (10) et une unité de commande (18) accouplée à celui-ci pour, entre autres, la transformation d'informations reçues via la ligne de bus (10) et pour la génération d'informations destinées à être transmises via la ligne de bus (10),
- chaque information comprenant des données de commande et des données utiles,
- les informations comprenant des premières informations dont les données utiles sont transmises via la ligne de bus (10) avec une première vitesse et des deuxièmes informations dont les données utiles sont transmises la ligne de bus (10) avec une deuxième vitesse supérieure à la première vitesse,
**caractérisé en ce que**
- les données de commande de chaque information comportent un codage représentant la vitesse de transmission des données utiles de l'information correspondante,
- les participants au bus (14, 16) comprenant des premiers participants au bus (14) qui ne sont aptes à pouvoir recevoir et traiter exclusivement que des premières données utiles et des deuxièmes participants au bus (16) qui sont aptes à pouvoir recevoir et traiter aussi bien des premières que des deuxièmes informations,
- l'émetteur/récepteur de bus (22) de chaque premier participant remplaçant, lors de la reconnaissance du codage représentant la deuxième vitesse de transmission de données utiles pendant la réception d'une deuxième information, les données utiles de cette deuxième information par des données utiles de remplacement, et transmettant ces données utiles de remplacement à l'unité de commande (18) avec la première vitesse et
- les données utiles de remplacement utilisées par l'émetteur/récepteur (22) d'un premier participant au bus (14) étant modifiables par un accès en écriture.

2. Réseau de communication CAN-FD selon la revendication 1, **caractérisé en ce que** les données utiles de remplacement utilisées par l'émetteur/récepteur (22) d'un premier participant au bus (14) étant modifiables par un accès en écriture via la ligne de bus (12) ou par le premier participant au bus (14) lui-même.

3. Réseau de communication CAN-FD selon la revendication 1 ou 2, **caractérisé en ce que** l'émetteur/récepteur (22) de chaque premier participant au bus empêche, en réaction à la reconnaissance du codage représentant la deuxième vitesse de transmission de données utiles pendant la réception d'une deuxième information, la transmission des données utiles de cette deuxième information à l'unité de commande (18) et transmet comme une première information, pour compléter l'information à transmettre à cette unité de commande (18), des données utiles de remplacement avec la première vitesse à l'unité de commande (18).

4. Réseau de communication CAN-FD selon la revendication 1 ou 2, **caractérisé en ce qu'**un premier participant au bus (14) se comporte, en réaction à la réception des données utiles de remplacement par son unité de commande (18), comme lors de la réception d'une première information non adressée à ce premier participant au bus (14).

5. Réseau de communication CAN-FD selon l'une ou plusieurs des revendications 1 à 4, **caractérisé en ce qu'**un premier participant au bus (14) se comporte différemment, en réaction aux données utiles de remplacement reçues par son unité de commande (18), en fonction du contenu des données utiles de remplacement.
